# EUROPEAN PATENT APPLICATION

(11) **EP 4 801 134 A1**
(43) Date of publication of application: **02.09.2026**
(21) Application number: 24893471.3
(22) Date of filing: 20.11.2024
(51) Int. Cl.: H04W 56/00

(54) **SIGNAL TRANSMISSION AND RECEPTION METHODS, APPARATUSES, AND SYSTEMS**

(30) Priority: 21.11.2023 CN 202311562399
(71) Applicant: Huawei Technologies Co., Ltd., Shenzhen, Guangdong 518129 (CN)
(72) Inventor: ZHANG, Yangyang, Shenzhen, Guangdong 518129 (CN); MA, Siqi, Shenzhen, Guangdong 518129 (CN); YU, Zheng, Shenzhen, Guangdong 518129 (CN)
(74) Representative: Thun, Clemens
(86) International application number: PCT/CN2024/133262
(87) International publication number: WO 2025/108315

(57) **Abstract**

Embodiments of this application relate to the field of communication technologies, and disclose a signal sending method, a signal receiving method, an apparatus, and a system, to save energy on a network side and/or a terminal device side. The method includes: A network device determines at least one sending occasion of a first synchronization signal. The at least one sending occasion is periodic, and the at least one sending occasion includes a first sending occasion. If the first sending occasion overlaps a sending resource of a first signal in time domain, and a priority of the first signal is higher than a priority of the first synchronization signal, the network device sends a second synchronization signal in a first time period. The first time period is in a period to which the first sending occasion belongs and is later than an end moment of the first sending occasion.

## Description

This application claims priority to Chinese Patent Application No. 202311562399.8, filed with the China National Intellectual Property Administration on November 21, 2023 and entitled "SIGNAL SENDING METHOD, SIGNAL RECEIVING METHOD, APPARATUS, AND SYSTEM", which is incorporated herein by reference in its entirety.

### TECHNICAL FIELD

This application relates to the field of communication technologies, and in particular, to a signal sending method, a signal receiving method, an apparatus, and a system.

### BACKGROUND

In a communication system, in addition to a latency, reliability, and feasibility, energy efficiency of a terminal device is also critical. In a fifth generation (fifth generation, 5G) mobile communication system, a terminal device may use a design in which a separate receiver that has a capability of monitoring a wake-up signal with low power consumption wakes up a main receiver when the wake-up signal is received, to implement a higher energy saving gain. In this design, when the main receiver is not woken up, the main receiver is in a disabled or deep sleep state, and may be configured to perform data transmission and reception after being woken up. The separate receiver that has the capability of monitoring the wake-up signal with low power consumption may be referred to as a low-power wake-up receiver (low-power wake-up receiver, LP-WUR). Usually, due to low power consumption, the LP-WUR usually may remain always-on to monitor the wake-up signal. The wake-up signal may also be referred to as a low-power wake-up signal (low-power wake-up signal, LP-WUS).

To reduce power consumption, the terminal device using the LP-WUR design usually uses a simple architecture and is equipped with a low-precision clock, which may cause a high time offset when the LP-WUR receives the LP-WUS. When the time offset accumulates to a specific threshold, the LP-WUR may fail to receive the LP-WUS. To reduce the time offset, a manner is to send a synchronization signal to the LP-WUR, so that the LP-WUR performs time synchronization.

However, for the LP-WUR design, a current mechanism for sending the synchronization signal still has a defect. For example, a mechanism for sending a synchronization signal is as follows: When a network side periodically sends a synchronization signal to a terminal device, if the network side sends an LP-WUS to the terminal device, the network side further sends another synchronization signal to the terminal device before sending the LP-WUS. However, this mechanism of sending the two synchronization signals in a hybrid manner may bring a heavy burden to resources on the network side.

### SUMMARY

Embodiments of this application provide a signal sending method, a signal receiving method, an apparatus, and a system, to save energy on a network side and/or a terminal device side while ensuring a low time offset.

The following technical solutions are used in embodiments of this application.

According to a first aspect, a signal sending method is provided. The method may be performed by a network device, or may be performed by a module (for example, a processor, a chip, or a chip system) used in a network device. The following uses an example in which the network device performs the method for description. The method includes: The network device determines at least one sending occasion of a first synchronization signal. The at least one sending occasion is periodic, and the at least one sending occasion includes a first sending occasion. The network device determines, according to a rule, whether to send a second synchronization signal whose type is different from that of the first synchronization signal. The rule includes: if the first sending occasion overlaps a sending resource of a first signal in time domain, and a priority of the first signal is higher than a priority of the first synchronization signal, sending the second synchronization signal in a first time period. The first time period is in a period to which the first sending occasion belongs and is later than an end moment of the first sending occasion.

According to the signal sending method provided in this embodiment of this application, when the first synchronization signal collides with another signal with a higher priority, and the first sending occasion is likely to be occupied to send the signal with the higher priority, the network device may send another synchronization signal (namely, the second synchronization signal), to ensure a low time offset of a terminal device, and reduce a retransmission probability of a useful signal, for example, a paging signal. However, if no collision occurs between the first synchronization signal and another signal, the network device does not need to additionally send the second synchronization signal. According to this sending mechanism, the network device may send another synchronization signal only when one synchronization signal cannot be sent. This saves energy on a network side and reduces resource overheads on the network side while ensuring the low time offset.

With reference to the first aspect, in a possible design, the first time period is within a first duration before a paging occasion, and the paging occasion is used to send a wake-up signal.

According to this solution, the terminal device may determine, based on the configured paging occasion and the first duration, a start point for detecting the second synchronization signal, and does not need to keep detecting the second synchronization signal, thereby saving energy of the terminal device.

With reference to the first aspect, in a possible design, the method further includes: The network device sends first indication information, where the first indication information indicates the first duration; or the first duration is predefined.

This solution provides a plurality of manners of determining the first duration, and one manner may be selected based on an actual requirement to determine the first duration.

According to a second aspect, a signal sending method is provided. The method may be performed by a network device, or may be performed by a module (for example, a processor, a chip, or a chip system) used in a network device. The following uses an example in which the network device performs the method for description. The method includes: The network device determines at least one sending occasion of a first synchronization signal. The at least one sending occasion is periodic, and the at least one sending occasion includes a first sending occasion. The network device determines, according to a rule, whether to send a second synchronization signal whose type is different from that of the first synchronization signal. The rule includes: if an interval between the first sending occasion and a paging occasion in time domain is greater than or not less than a first threshold, sending the second synchronization signal in a first time period. The paging occasion is used to send a wake-up signal, and the first time period is in a period to which the first sending occasion belongs and is later than an end moment of the first sending occasion.

That the interval between the first sending occasion and the paging occasion in time domain is greater than or not less than the first threshold means that there is a large interval between the paging occasion and the first synchronization signal sent on the first sending occasion in time domain. In this case, if the network device sends the wake-up signal on the paging occasion, because there is the large interval between the first synchronization signal and the wake-up signal in time domain, a time offset may be high when the terminal device receives the wake-up signal. In this scenario, according to the signal sending method provided in this embodiment of this application, the network device may additionally send another synchronization signal (namely, the second synchronization signal), only when the interval between the first sending occasion and the paging occasion in time domain is greater than or not less than the first threshold, to reduce the time offset. If the interval between the first sending occasion and the paging occasion in time domain is less than or not greater than the first threshold, the network device does not need to send the second synchronization signal. According to this signal sending mechanism, energy of the network device can be saved and resource overheads on a network side can be reduced while ensuring a low time offset.

With reference to the second aspect, in a possible design, the rule may further include: If the interval between the first sending occasion and the paging occasion in time domain is less than or not greater than the first threshold, the network device determines not to send the second synchronization signal in the period to which the first sending occasion belongs.

That the interval between the first sending occasion and the paging occasion in time domain is less than or not greater than the first threshold means that there is a small interval between the paging occasion and the first synchronization signal sent on the first sending occasion in time domain. In this case, if the network device sends the wake-up signal on the paging occasion, because there is the small interval between the first synchronization signal and the wake-up signal in time domain, a time offset shall be within an acceptable range when the terminal device receives the wake-up signal. In this scenario, the network device may send only the first synchronization signal, and does not need to send another synchronization signal (namely, the second synchronization signal), so that energy of the network device can be saved, and resource overheads on a network side can be reduced.

With reference to the second aspect, in a possible design, the method further includes: The network device sends second indication information, where the second indication information indicates that there is no second synchronization signal in the period to which the first sending occasion belongs.

According to this solution, the terminal device may determine, based on an indication of the second indication information, that there is no need to detect the second synchronization signal in the period to which the first sending occasion belongs. This helps save energy of the terminal device.

With reference to the second aspect, in a possible design, that the network device sends the second indication information includes: The network device sends the second indication information in a period previous to the period to which the first sending occasion belongs; or the network device sends the second indication information within the first sending occasion.

In this solution, a plurality of time periods in which the second indication information can be sent are provided, and one time period may be selected based on an actual requirement to send the second indication information.

With reference to the second aspect, in a possible design, the first time period is within a first duration before the paging occasion.

According to this solution, the terminal device may determine, based on the configured paging occasion and the first duration, a start point for detecting the second synchronization signal, and does not need to keep detecting the second synchronization signal, thereby saving energy of the terminal device.

With reference to the second aspect, in a possible design, the method further includes: The network device sends third indication information, where the third indication information indicates the first duration; or the first duration is predefined.

This solution provides a plurality of manners of determining the first duration, and one manner may be selected based on an actual requirement to determine the first duration.

With reference to the second aspect, in a possible design, the method further includes: The network device sends fourth indication information, where the fourth indication information indicates the first threshold; or the first threshold is predefined.

This solution provides a plurality of manners of determining the first threshold, and one manner may be selected based on an actual requirement to determine the first threshold.

According to a third aspect, a signal receiving method is provided. The method may be performed by a terminal device, or may be performed by a module (for example, a processor, a chip, or a chip system) used in a terminal device. The following uses an example in which the terminal device performs the method for description. The method includes: The terminal device determines at least one receiving occasion of a first synchronization signal, where the at least one receiving occasion is periodic, and the at least one receiving occasion includes a first receiving occasion. The terminal device determines, according to a rule, whether to detect a second synchronization signal whose type is different from that of the first synchronization signal. The rule includes: If no first synchronization signal is detected on the first receiving occasion, the terminal device detects a second synchronization signal in a second time period, where the second time period is in a period to which the first receiving occasion belongs and is later than an end moment of the first receiving occasion.

If the terminal device does not detect the first synchronization signal on the first receiving occasion, it indicates that another signal may collide with the first synchronization signal on the network device side. Consequently, the network device does not send the first synchronization signal. In this case, the network device may send another synchronization signal, namely, the second synchronization signal, in the period to which the first receiving occasion belongs, to ensure the low time offset. In this scenario, according to the signal receiving method provided in this embodiment of this application, the terminal device may detect the second synchronization signal in the second time period only when the terminal device does not detect the first synchronization signal on the first receiving occasion. However, if the terminal device detects the first synchronization signal on the first receiving occasion, the terminal device does not need to additionally detect the second synchronization signal in the second time period. According to this receiving mechanism, the terminal device may detect another synchronization signal only when one synchronization signal is not detected. This saves energy on the terminal device side and further reduces resource overheads while ensuring the low time offset.

With reference to the third aspect, in a possible design, the rule further includes: if the first synchronization signal is detected on the first receiving occasion, detecting a wake-up signal on a paging occasion, where the paging occasion is in the period to which the first receiving occasion belongs.

If the terminal device detects the first synchronization signal on the first receiving occasion, it indicates that the first synchronization signal is normally sent on the network device side. In this case, the network device may not send the second synchronization signal. In this scenario, the terminal device only needs to detect the wake-up signal on the paging occasion, and does not need to detect the second synchronization signal in the second time period in the period to which the first receiving occasion belongs. This helps save energy of the terminal device.

With reference to the third aspect, in a possible design, the second time period is within a first duration before a paging occasion, and the paging occasion is used to detect a wake-up signal.

According to this solution, the terminal device may determine, based on the configured paging occasion and the first duration, a start point for detecting the second synchronization signal, and does not need to keep detecting the second synchronization signal, thereby saving energy of the terminal device.

With reference to the third aspect, in a possible design, the method further includes: The terminal device receives first indication information, where the first indication information indicates the first duration; or the first duration is predefined.

This solution provides a plurality of manners of determining the first duration, and one manner may be selected based on an actual requirement to determine the first duration.

According to a fourth aspect, a signal receiving method is provided. The method may be performed by a terminal device, or may be performed by a module (for example, a processor, a chip, or a chip system) used in a terminal device. The following uses an example in which the terminal device performs the method for description. The method includes: The terminal device determines at least one receiving occasion of a first synchronization signal, where the at least one receiving occasion is periodic, and the at least one receiving occasion includes a first receiving occasion. The terminal device determines, according to a rule, whether to detect a second synchronization signal whose type is different from that of the first synchronization signal. The rule includes: If an interval between the first receiving occasion and a paging occasion in time domain is greater than or not less than a first threshold, detecting the second synchronization signal in a second time period. The paging occasion is used to detect a wake-up signal, and the second time period is in a period to which the first receiving occasion belongs and is later than an end moment of the first receiving occasion.

That the interval between the first receiving occasion and the paging occasion in time domain is greater than or not less than the first threshold means that if the network device sends the first synchronization signal on the first receiving occasion, there is a large interval between the first synchronization signal and the paging occasion in time domain. In this case, to ensure a low time offset of the wake-up signal, the network device may send another synchronization signal (namely, the second synchronization signal). In this scenario, according to the signal receiving method provided in this embodiment of this application, the terminal device may detect the second synchronization signal in the second time period only when the interval between the first receiving occasion and the paging occasion in time domain is greater than or not less than the first threshold. If the interval between the first receiving occasion and the paging occasion in time domain is less than or not greater than the first threshold, the terminal device does not need to additionally detect the second synchronization signal in the second time period. According to this signal receiving mechanism, energy of the terminal device can be saved and resource overheads are further reduced while ensuring the low time offset.

With reference to the fourth aspect, in a possible design, the rule further includes: if the interval between the first receiving occasion and the paging occasion in time domain is less than or not greater than the first threshold, determining not to detect the second synchronization signal in the period to which the first receiving occasion belongs.

That the interval between the first receiving occasion and the paging occasion in time domain is less than or not greater than the first threshold means that if the network device sends the first synchronization signal on the first receiving occasion, there is a small interval between the first synchronization signal and the paging occasion in time domain. In this case, the time offset shall be within an acceptable range. Therefore, the network device may not send another synchronization signal, namely, the second synchronization signal. In this scenario, the terminal device does not need to detect the second synchronization signal in the period to which the first receiving occasion belongs. This helps save energy of the terminal device.

With reference to the fourth aspect, in a possible design, the method further includes: The terminal device receives second indication information, where the second indication information indicates that there is no second synchronization signal in the period to which the first receiving occasion belongs. The terminal device determines, based on the second indication information, not to detect the second synchronization signal in the period to which the first receiving occasion belongs.

According to this solution, the terminal device may determine, based on an indication of the second indication information, not to detect the second synchronization signal. This helps save energy of the terminal device.

With reference to the fourth aspect, in a possible design, the second time period is within a first duration before the paging occasion.

According to this solution, the terminal device may determine, based on the configured paging occasion and the first duration, a start point for detecting the second synchronization signal, and does not need to keep detecting the second synchronization signal, thereby saving energy of the terminal device.

With reference to the fourth aspect, in a possible design, the method further includes: The terminal device receives third indication information, where the third indication information indicates the first duration; or the first duration is predefined.

This solution provides a plurality of manners of determining the first duration, and one manner may be selected based on an actual requirement to determine the first duration.

With reference to the fourth aspect, in a possible design, the method further includes: The terminal device receives fourth indication information, where the fourth indication information indicates the first threshold; or the first threshold is predefined.

This solution provides a plurality of manners of determining the first threshold, and one manner may be selected based on an actual requirement to determine the first threshold.

According to a fifth aspect, a communication apparatus is provided to implement the foregoing methods. The communication apparatus may be the network device according to any one of the first aspect, the implementations of the first aspect, the second aspect, or the implementations of the second aspect, or an apparatus including the network device, or an apparatus included in the network device, for example, a chip. Alternatively, the communication apparatus may be the terminal device according to any one of the third aspect, the implementations of the third aspect, the fourth aspect, or the implementations of the fourth aspect, or an apparatus including the terminal device, or an apparatus included in the terminal device, for example, a chip.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement the sending function and/or the receiving function according to any one of the first aspect, the second aspect, the third aspect, or the fourth aspect and the possible implementations of the first aspect, the second aspect, the third aspect, or the fourth aspect. The transceiver module may include a transceiver circuit, a transceiver machine, a transceiver, or a communication interface. The processing module may be configured to implement a processing function according to any one of the first aspect, the second aspect, the third aspect, or the fourth aspect and the possible implementations of the first aspect, the second aspect, the third aspect, or the fourth aspect.

In some possible designs, the transceiver module includes a sending module and a receiving module, respectively configured to implement sending and receiving functions according to any one of the first aspect, the second aspect, the third aspect, or the fourth aspect and the possible implementations of the first aspect, the second aspect, the third aspect, or the fourth aspect.

According to a sixth aspect, a communication apparatus is provided, and includes a processor and a memory. The memory is configured to store computer instructions. When the processor executes the instructions, the communication apparatus is enabled to perform the method according to any one of the foregoing aspects. The communication apparatus may be the network device according to any one of the first aspect, the implementations of the first aspect, the second aspect, or the implementations of the second aspect, or an apparatus including the network device, or an apparatus included in the network device, for example, a chip. Alternatively, the communication apparatus may be the terminal device according to any one of the third aspect, the implementations of the third aspect, the fourth aspect, or the implementations of the fourth aspect, or an apparatus including the terminal device, or an apparatus included in the terminal device, for example, a chip.

According to a seventh aspect, a communication apparatus is provided, and includes a processor and a communication interface. The communication interface is configured to communicate with a module outside the communication apparatus. The processor is configured to execute a computer program or instructions, so that the communication apparatus performs the method according to any one of the foregoing aspects. The communication apparatus may be the network device according to any one of the first aspect, the implementations of the first aspect, the second aspect, or the implementations of the second aspect, or an apparatus including the network device, or an apparatus included in the network device, for example, a chip. Alternatively, the communication apparatus may be the terminal device according to any one of the third aspect, the implementations of the third aspect, the fourth aspect, or the implementations of the fourth aspect, or an apparatus including the terminal device, or an apparatus included in the terminal device, for example, a chip.

According to an eighth aspect, a communication apparatus is provided, and includes at least one processor. The processor is configured to execute a computer program or instructions stored in a memory, so that the communication apparatus performs the method according to any one of the foregoing aspects. The memory may be coupled to the processor, or may be independent of the processor. The communication apparatus may be the network device according to any one of the first aspect, the implementations of the first aspect, the second aspect, or the implementations of the second aspect, or an apparatus including the network device, or an apparatus included in the network device, for example, a chip. Alternatively, the communication apparatus may be the terminal device according to any one of the third aspect, the implementations of the third aspect, the fourth aspect, or the implementations of the fourth aspect, or an apparatus including the terminal device, or an apparatus included in the terminal device, for example, a chip.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects or the implementations of the foregoing aspects.

According to a tenth aspect, a computer program product including instructions is provided. When the computer program product runs on a communication apparatus, the communication apparatus is enabled to perform the method according to any one of the foregoing aspects or the implementations of the foregoing aspects.

According to an eleventh aspect, a communication apparatus (for example, the communication apparatus may be a chip or a chip system) is provided. The communication apparatus includes a processor, configured to implement a function according to any one of the foregoing aspects or the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus according to any one of the fifth aspect to the eighth aspect is a chip, the foregoing sending action/function may be understood as outputting, and the foregoing receiving action/function may be understood as inputting.

For technical effect brought by any one of the implementations of the fifth aspect to the eleventh aspect, refer to the technical effect brought by the corresponding implementations of the first aspect to the fourth aspect. Details are not described herein again.

It should be noted that various possible implementations of any one of the foregoing aspects may be combined provided that the solutions are not contradictory.

According to a twelfth aspect, a communication system is provided. The communication system includes a network device that performs the method according to the first aspect and a terminal device that performs the method according to the third aspect. Alternatively, the communication system includes a network device that performs the method according to the second aspect and a terminal device that performs the method according to the fourth aspect.

### BRIEF DESCRIPTION OF DRAWINGS

FIG. 1 is a diagram of an LP-WUS design;
FIG. 2 is a diagram in which a time offset on a terminal device side gradually increases;
FIG. 3A to FIG. 3C are diagrams of three sending mechanisms for a synchronization signal;
FIG. 4 is a diagram of a communication system according to an embodiment of this application;
FIG. 5 is an interaction diagram of a signal sending and receiving method according to an embodiment of this application;
FIG. 6 is a diagram of determining, according to a preset rule, whether to send a second synchronization signal according to an embodiment of this application;
FIG. 7 is an interaction diagram of another signal sending and receiving method according to an embodiment of this application;
FIG. 8 is a diagram of determining, according to another preset rule, whether to send a second synchronization signal according to an embodiment of this application;
FIG. 9 is a diagram of composition of a communication apparatus according to an embodiment of this application; and
FIG. 10 is a diagram of a hardware structure of a communication apparatus according to an embodiment of this application.

### DESCRIPTION OF EMBODIMENTS

To facilitate understanding of the technical solutions in embodiments of this application, related technologies in embodiments of this application are first briefly described below.

### 1. LP-WUR:

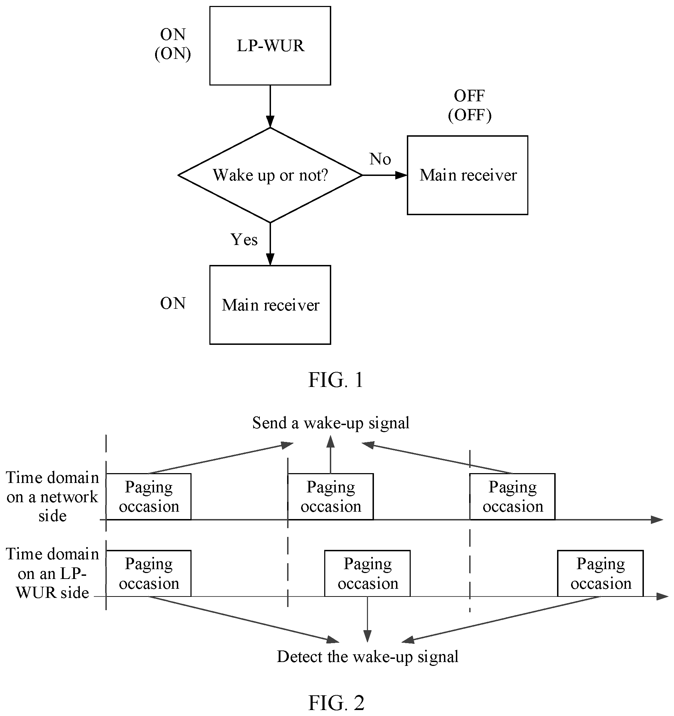

A terminal device may use an LP-WUR design to implement an energy saving gain. FIG. 1 is a diagram of a working procedure of an LP-WUR. As shown in FIG. 1, the LP-WUR has low power consumption, and may be kept in an ON state to monitor a wake-up signal (where a wake-up signal designed for the LP-WUR may be referred to as an LP-WUS). After detecting the wake-up signal, the LP-WUR may determine whether the wake-up signal is sent to a terminal device to which the LP-WUR belongs. If the wake-up signal is sent to the terminal device, the LP-WUR may wake up a main receiver. If the wake-up signal is not sent to the terminal device, the LU-WUR may not wake up the main receiver. When the main receiver is not woken up, the main receiver may be turned off or set to a deep sleep state. After the main receiver is woken up, the main receiver may perform data or signaling transmission.

In a possible scenario, a network side may send the wake-up signal to the terminal device when the network side wants to page the terminal device. In this case, the wake-up signal may have a function of paging the terminal device, and may be referred to as a paging signal.

Currently, the LP-WUR may detect the wake-up signal by using a periodic paging occasion (paging occasion). The LP-WUR may start to detect the wake-up signal at a start time-domain position of the paging occasion. If the wake-up signal is detected within the paging occasion, the detection ends. If no wake-up signal is detected within the paging occasion, the detection ends at an end time-domain position of the paging occasion. In other words, the terminal device may determine, based on the paging occasion, a time-domain position at which the wake-up signal can start to be detected.

In this specification, the occasion means one time domain resource or a segment of consecutive time domain resources. This applies throughout and will not be repeated below.

It may be understood that, on the network side, the paging occasion is used to send the wake-up signal. On the terminal device side, the paging occasion is used to detect the wake-up signal.

The paging occasion may be specific to a terminal device. In this case, a single terminal device has a dedicated paging occasion. Alternatively, the paging occasion may be specific to a terminal device group. In this case, all terminal devices in one terminal device group have a same paging occasion in one period.

The paging occasion may be configured by the network side, or may be predefined, or may be determined by the terminal device, or may be determined with reference to any one or more of the foregoing manners. For example, the network side may configure duration of a single paging occasion and duration of a period to which the paging occasion belongs. If the paging occasion is specific to a terminal device, the terminal device may determine a time-domain position of a first paging occasion based on an identity (identity, ID) of the terminal device; or if the paging occasion is specific to a terminal device, a terminal device may determine a time-domain position of a first paging occasion based on an identity of a terminal device group (group ID) to which the terminal device belongs, to determine a time-domain position of a periodic paging occasion based on configuration of the network device.

To reduce power consumption, the terminal device using the LP-WUR design usually uses a simple architecture and is equipped with a low-precision clock, which may cause a time offset when the LP-WUR receives the wake-up signal. As shown in FIG. 2, the network side sends a wake-up signal on a paging occasion, and the LP-WUR detects a wake-up signal on a paging occasion. A time offset of the LP-WUR relative to the network side gradually increases with time. When the time offset is within a specific range, the LP-WUR may still detect the wake-up signal on the paging occasion. However, when the time offset accumulates to a specific threshold, the paging occasion on the network side and the paging occasion on the LP-WUR side may be completely staggered. As a result, the LP-WUR may fail to detect an LP-WUS, affecting normal operating of a terminal device.

To reduce the time offset, a manner is to send a synchronization signal to the LP-WUR, so that the LP-WUR performs time synchronization. The synchronization signal sent to the LP-WUS may be an existing synchronization signal, for example, may be a synchronization signal block (synchronization signal/physical broadcast channel block, SSB) in a new radio (new radio, NR) system, or may be a redesigned synchronization signal. The redesigned synchronization signal may be modulated based on different modulation schemes, for example, may be a synchronization signal obtained through on-off keying (on-off keying, OOK), a synchronization signal obtained through frequency shift keying (frequency shift keying, FSK), a synchronization signal obtained through orthogonal frequency-division multiplexing (orthogonal frequency-division multiplexing, OFDM), or a synchronization signal obtained by combining the foregoing different modulation schemes.

Currently, for the LP-WUR design, there are a plurality of sending mechanisms for a synchronization signal.

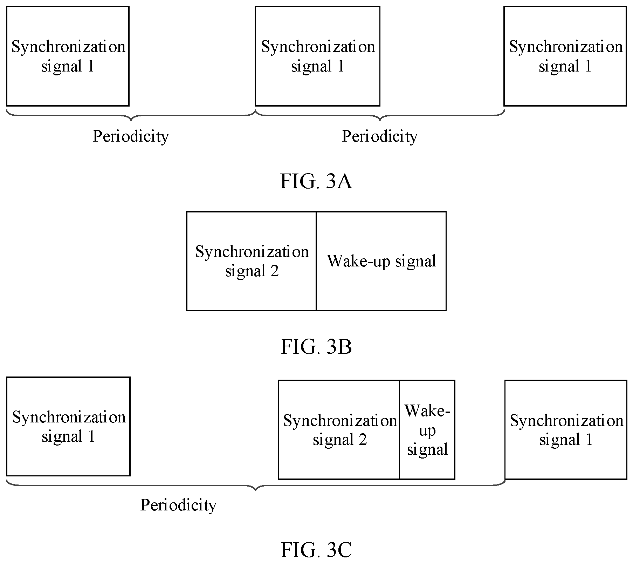

Mechanism 1: Periodically send a synchronization signal. For example, as shown in FIG. 3A, a synchronization signal 1 is periodically sent. Generally, the periodically sent synchronization signal is specific to a cell. That is, the network side sends, in a same sending period, the synchronization signal to all terminal devices that use the LP-WUR design in one cell. In this case, all the terminal devices that use the LP-WUR design in the cell may detect, in the period, the synchronization signal on a same occasion.

Mechanism 2: Send a synchronization signal together with a wake-up signal. In the mechanism 2, the network side sends the synchronization signal before sending the wake-up signal only when the wake-up signal needs to be sent. For example, as shown in FIG. 3B, a synchronization signal 2 is sent before the wake-up signal.

Mechanism 3: A periodically sent synchronization signal and a synchronization signal sent together with a wake-up signal coexist. As shown in FIG. 3C, when a synchronization signal 1 is periodically sent, a synchronization signal 2 is sent together with the wake-up signal.

However, the foregoing sending mechanisms still have defects. If the mechanism 1 is used, the synchronization signal may be configured at the cell level. However, different terminal devices that use the LP-WUR design in a same cell may have different requirements on a sending period of the synchronization signal, and a sending period of the synchronization signal configured by the network side may not meet the requirements of the different terminal devices. For example, it is assumed that in the same cell, precision of a clock equipped by a terminal device 1 is lower than precision of a clock equipped by a terminal device 2. To reduce a time offset, duration of a sending period of the synchronization signal expected by the terminal device 1 is less than that expected by the terminal device 2.

If the mechanism 2 is used, because the terminal device cannot determine whether the wake-up signal is sent, the terminal device cannot determine whether the synchronization signal is sent. Therefore, the terminal device needs to continuously detect the synchronization signal. This is not conducive to energy saving of the terminal device.

If the mechanism 3 is used, the network side needs to send two types of synchronization signals in a hybrid manner. In comparison with the mechanism 1 or 2 in which only one type of synchronization signal needs to be sent, in the mechanism 3, resource overheads are greatly increased, which may cause a heavy burden to resources on the network side.

Based on the defects in the current sending mechanisms for the synchronization signal, embodiments of this application provide a signal sending and receiving method, and propose a new sending mechanism for a synchronization signal, to reduce resource overheads on the network side while saving energy of the terminal device.

The following describes the technical solutions in embodiments of this application with reference to the accompanying drawings in embodiments of this application. In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one of a, b, or c may indicate: "a", "b", "c", "a and b", "a and c", "b and c", or "a, b, and c", where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word "example" or "for example" is used to represent giving an example, an illustration, or a description. Any embodiment or design scheme described as an "example" or "for example" in embodiments of this application shall not be explained as being more preferred or having more advantages than another embodiment or design scheme. To be precise, use of the term "example", "for example", or the like is intended to present a related concept in a specific manner for ease of understanding.

In embodiments of this application, "indication" may include a direct indication and an indirect indication, or may include an explicit indication and an implicit indication. Information indicated by a piece of information (for example, first indication information described below) is referred to as to-be-indicated information. In this case, in a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit-end device by sending configuration information to a receive-end device.

In embodiments of this application, "define in advance", "predefine", "configure in advance", or "preconfigure" may be implemented by pre-storing corresponding code or a corresponding table in a device, or may be implemented in another manner for indicating related information, for example, may be burnt into the device before delivery of the device. A specific implementation is not limited in embodiments of this application. "Store" may mean "being stored" in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, descriptions such as "when ...", "in a case of ...", and "if" all mean that a device performs corresponding processing in an objective case, and do not limit time, and the device is not required to perform a determining action during implementation. This does not mean that there is another limitation.

The technical solutions provided in this application may be applied to various communication systems, for example, may be applied to a 3rd generation partnership project (3rd Generation Partnership Project, 3GPP) communication system, for example, a 4th generation (4th generation, 4G) long term evolution (long term evolution, LTE) system, a 5G mobile communication system and an evolved system thereof, a vehicle-to-everything (vehicle-to-everything, V2X) system, a long term evolution (long term evolution, LTE) and new radio (new radio, NR) hybrid networking system, a device-to-device (device-to-device, D2D) system, a machine-to-machine (machine-to-machine, M2M) communication system, the internet of things (internet of things, IoT), and another next-generation communication system, for example, a 6th generation (6th generation, 6G) mobile communication system.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may learn that with the evolution of the network architecture and the emergence of new service scenarios, the technical solutions provided in embodiments of this application are also applicable to similar technical problems.

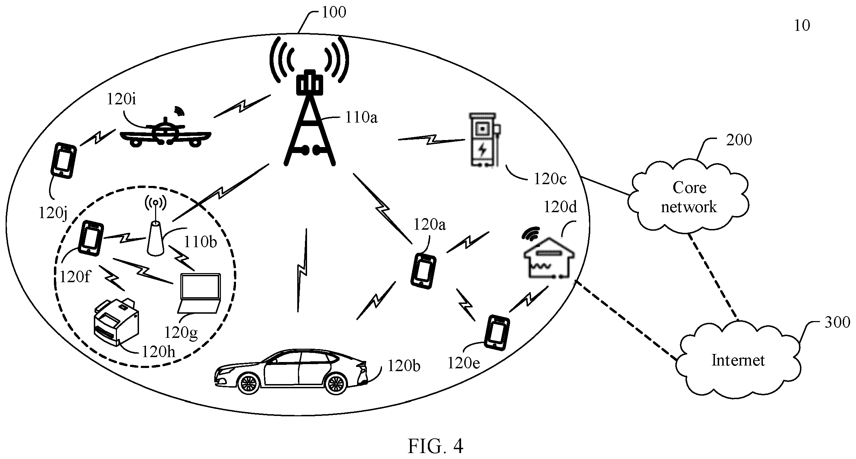

FIG. 4 is a diagram of a possible and non-limiting communication system to which an embodiment of this application is applicable. As shown in FIG. 4, the communication system 10 includes a RAN 100. The RAN 100 includes at least one RAN node (for example, 110a and 110b in FIG. 4, collectively referred to as 110) and at least one terminal device 120 (for example, 120a to 120j in FIG. 4, collectively referred to as 120). The RAN 100 may further include another device, for example, a wireless relay device and/or a wireless backhaul device (not shown in FIG. 4). The terminal device 120 may be connected to the network device 110 in a wireless manner.

As shown in FIG. 4, optionally, the communication system 10 may further include a core network (core network, CN) 200. The RAN node 110 may be connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

As shown in FIG. 4, optionally, the communication system 10 may further include an internet 300. The internet may be connected to the core network or the RAN.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a RAN entity, an access node, or the like, and forms a part of the communication system, to help the terminal device implement radio access. A plurality of RAN nodes 110 in the communication system 10 may be nodes of a same type, or may be nodes of different types. In some scenarios, roles of the RAN node 110 and the terminal device 120 are relative. For example, a network element 120i in FIG. 4 may be a helicopter or an uncrewed aerial vehicle, and may be configured as a mobile base station. For a terminal device 120j that accesses the RAN 100 through the network element 120i, the network element 120i is a base station. However, for a base station 110a, the network element 120i is a terminal device. The RAN node 110 and the terminal device 120 both are sometimes referred to as communication apparatuses. For example, the network elements 110a and 110b in FIG. 4 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a V2X technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal device in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The RAN node may also be expressed differently, for example, a network device. In this application, unless otherwise specified, a network device is used for description below.

The terminal device may be a device having a wireless transceiver function, and may also be referred to as a terminal (terminal), user equipment (user equipment, UE), a mobile station, a mobile terminal device, or the like. The terminal device may be widely applied to various scenarios, such as D2D, V2X communication, machine-type communication (machine-type communication, MTC), IoT, virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, and smart city. The terminal device may be a mobile phone, a tablet computer, a computer having a wireless transceiver function, a wearable device, a vehicle, an unmanned aerial vehicle, a helicopter, an airplane, a ship, a robot, a robotic arm, a smart home device, or the like. A device form of the terminal device is not limited in embodiments of this application.

The following describes in detail the signal sending and receiving method provided in embodiments of this application by using an example in which a network device interacts with any terminal device. Processing performed by a single execution body in embodiments of this application may alternatively be performed by a plurality of execution bodies. These execution bodies may be logically and/or physically separated. For example, processing performed by the network device may be performed by at least one of a CU, a DU, and an RU.

Optionally, in embodiments of this application, the terminal device may use the LP-WUR design described above, or the terminal device may not use the LP-WUR design.

It should be noted that names of messages between network elements, names of parameters in the messages, or the like in the following embodiments of this application are merely examples, and there may be other names in a specific implementation. This is not specifically limited in embodiments of this application.

It should be noted that a time period (for example, a first time period or a second time period) in the following embodiments of this application may be a moment, or may be one time domain resource or a segment of consecutive time domain resources.

A unit of the time domain resource is not limited in embodiments of this application. For example, the unit may be an absolute time unit like a microsecond, a millisecond, or a second, or may be a communication time unit like a system frame (system frame, SF), a system subframe (minor frame), a slot (slot), a symbol (symbol), or a mini-slot (mini-slot).

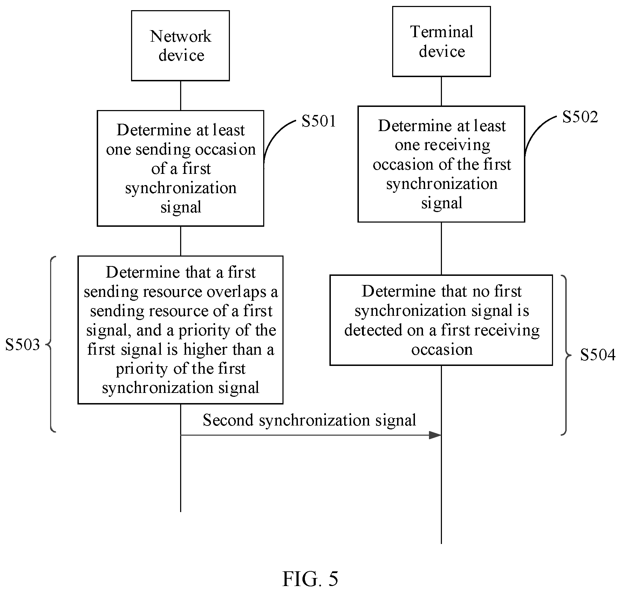

FIG. 5 shows a signal sending and receiving method according to an embodiment of this application. In FIG. 5, an example in which a network device and a terminal device are used as execution bodies for interaction is used to illustrate the method. However, the execution bodies for interaction are not limited in this application. For example, the network device in FIG. 5 may alternatively be a module, for example, a chip, a chip system, or a processor, used in the network device, or may be a logical node, a logical module, or software that can implement all or a part of functions of a network device node. For another example, the terminal device in FIG. 5 may alternatively be a module, for example, a chip, a chip system, or a processor, used in the terminal device, or may be a logical node, a logical module, or software that can implement all or a part of functions of a terminal device node. The signal sending and receiving method includes the following steps.

S501: The network device determines at least one sending occasion of a first synchronization signal. The at least one sending occasion is periodic, and the at least one sending occasion includes a first sending occasion.

In S501, the sending occasion of the first synchronization signal is an occasion that may be used to send the first synchronization signal, but this does not mean that the network device necessarily sends the first synchronization signal on the sending occasion of the first synchronization signal. Before any sending occasion of the first synchronization signal, the network device may determine, based on an actual requirement, whether to send the first synchronization signal on the sending occasion.

It may be understood that the sending occasion of the first synchronization signal is periodic, which is equivalent to that the first synchronization signal is a periodically sent signal. In embodiments of this application, a period to which the sending occasion of the first synchronization signal belongs may also be referred to as a sending period of the first synchronization signal.

For determining the at least one sending occasion of the first synchronization signal, the network device may determine duration of a single sending occasion of the first synchronization signal, duration of the period to which the sending occasion of the first synchronization signal belongs, and a time-domain position of a first sending occasion of the first synchronization signal, to determine the at least one sending occasion of the first synchronization signal.

Optionally, the duration of the single sending occasion of the first synchronization signal and/or the duration of the period to which the sending occasion of the first synchronization signal belongs may be preset in the network device, or may be generated by the network device.

In embodiments of this application, "preset" may also be understood as "predefined", "preconfigured", "set in advance", "defined in a protocol", or "pre-agreed on (for example, pre-agreed on by the terminal device and the network device)". This applies throughout. Similar expressions below may also be understood in this way.

Optionally, the network device and the terminal device may align the sending occasion of the first synchronization signal. For example, the network device may configure, for the terminal device by using configuration information, the duration of the single sending occasion of the first synchronization signal, the duration of the period to which the sending occasion of the first synchronization signal belongs, and the time-domain position of the first sending occasion of the first synchronization signal.

When the network device and the terminal device align the sending occasion of the first synchronization signal, on a terminal device side, the sending occasion of the first synchronization signal may also be referred to as a receiving occasion of the first synchronization signal, which may be used by the terminal device to receive the first synchronization signal.

S502: The terminal device determines at least one receiving occasion of the first synchronization signal, where the at least one receiving occasion is periodic, and the at least one receiving occasion includes a first receiving occasion.

In S502, the receiving occasion of the first synchronization signal is an occasion that may be used to receive the first synchronization signal, but this does not mean that the terminal device necessarily receives the first synchronization signal on the receiving occasion of the first synchronization signal.

Optionally, the receiving occasion of the first synchronization signal may be configured by the network device for the terminal device. For example, the network device may configure, for the terminal device by using configuration information, duration of a single receiving occasion of the first synchronization signal, duration of a period to which the receiving occasion of the first synchronization signal belongs, and a time-domain position of a first receiving occasion of the first synchronization signal. For another example, duration of a single receiving occasion of the first synchronization signal or duration of a period to which the receiving occasion of the first synchronization signal belongs may alternatively be preset in the terminal device.

Alternatively, the receiving occasion of the first synchronization signal may be determined based on a paging occasion. In this case, there is a specific interval between the receiving occasion of the first synchronization signal and the paging occasion of the terminal device in time domain, and the terminal device may determine the receiving occasion of the first synchronization signal based on the paging occasion and duration of the interval. For example, the duration of the interval may be preset or configured by the network device.

The paging occasion may be configured by the network device. For details, refer to the foregoing descriptions of the related technologies in embodiment of this application. Details are not described herein again.

In embodiments of this application, if there is an interval between two segments of different time domain resources in time domain (for example, the foregoing interval between the receiving occasion of the first synchronization signal and the paging occasion in time domain in the foregoing descriptions, or an interval between the first sending occasion and the paging occasion in time domain in the following descriptions), two specific moments between which there is an interval is not limited in embodiments of this application. The first sending occasion and the paging occasion are used as an example. In this case, there is an interval between an end moment of the first sending occasion and a start moment of the paging occasion in time domain. For another example, there is an interval between a start moment of the first sending occasion and a start moment of the paging occasion in time domain. For another example, there is an interval between an end moment of the first sending occasion and an end moment of the paging occasion in time domain. There is the interval between the two segments of different time domain resources in time domain, and two specific moments between which there is an interval may be predefined.

In a possible case, on a network device side, the receiving occasion of the first synchronization signal may be used by the network device to send the first synchronization signal. In this case, on the network device side, the receiving occasion of the first synchronization signal may also be referred to as a sending occasion of the first synchronization signal. For details, refer to the foregoing descriptions of S501. It may be understood that, in this case, it is equivalent to that the first synchronization signal is a periodically sent signal.

A time sequence between S501 and S502 is not limited in embodiments of this application. FIG. 5 is merely an example for ease of understanding embodiments of this application, and does not represent an actual time sequence. For example, S501 may be performed before S502, or may be performed after S502, or S501 and S502 may be performed simultaneously.

The foregoing describes how the network device determines the sending occasion of the first synchronization signal and how the terminal device determines the receiving occasion of the first synchronization signal. Further, in embodiments of this application, the network device may determine, according to a preset rule, whether to send a second synchronization signal in the period to which the sending occasion of the first synchronization signal belongs. The terminal device may also determine, according to a preset rule, whether to detect the second synchronization signal in the period to which the receiving occasion of the first synchronization signal belongs.

The second synchronization signal is a synchronization signal whose type is different from that of the first synchronization signal. For example, the first synchronization signal may be a low power synchronization signal (low power synchronous signal, LP-SS). The second synchronization signal may be a preamble (preamble).

In the following, any sending occasion of the first synchronization signal is referred to as a first sending occasion, and any receiving occasion of the first synchronization signal is referred to as a first receiving occasion. In S503 and S504 below, the first sending occasion and the first receiving occasion are used as examples to separately describe content that the network device determines, according to the preset rule, whether to send the second synchronization signal in a period to which the first sending occasion belongs, and that the terminal device determines, according to the preset rule, whether to detect the second synchronization signal in a period to which the first receiving occasion belongs.

S503: A possible preset rule (referred to as a preset rule 1 below for ease of description) is that if the following two conditions are met: A first sending resource overlaps a sending resource of a first signal, and a priority of the first signal (or referred to as a sending priority of the first signal) is higher than a priority of the first synchronization signal (or referred to as a sending priority of the first synchronization signal), the network device sends the second synchronization signal in a first time period. The first time period is in the period to which the first sending occasion belongs and is later than an end moment of the first sending occasion.

A time domain resource of the first sending resource is the first sending occasion. In other words, the first sending resource is a resource used to send the first synchronization signal in the period to which the first sending occasion belongs.

The first signal may be any signal that is different from the first synchronization signal among the to-be-sent signals in the period to which the first sending occasion belongs, for example, may be a signal for transmitting service data, an SSB, a channel state information-reference signal (channel state information-reference signal, CSI-RS), a positioning-related signal, or a wake-up signal. The first signal may be an NR signal, an LTE signal, or a signal of another communication system.

The first sending resource may overlap a sending resource of the first signal in time domain, frequency domain, space domain, or code domain. It may be understood that the first sending resource overlaps the sending resource of the first signal in time domain, in other words, the first sending occasion overlaps the sending resource of the first signal in time domain.

That the first sending resource overlaps the sending resource of the first signal may indicate that a part of resources overlap or all resources overlap.

It may be understood that if the sending resource of the first signal overlaps the first sending resource, and the priority of the first signal is higher than the priority of the first synchronization signal, the network device preferentially sends the first signal, and the first sending occasion is likely to be occupied to send the first signal. Because the first synchronization signal that can be originally sent on the first sending occasion is not sent, to ensure a low time offset of the terminal device in the period to which the first sending occasion belongs, the network device may send, according to the preset rule 1, the second synchronization signal to the terminal device in the first time period in the period to which the first sending occasion belongs.

The first sending resource is occupied by the first signal with a higher priority, and consequently, the first synchronization signal that shall be sent on the first sending occasion is actually not sent. This may also be referred to as a "collision" between the first signal and the first synchronization signal.

According to the signal sending method provided in embodiments of this application, when the periodic first synchronization signal "collides" with another signal, the network device may additionally send another synchronization signal, namely, the second synchronization signal, to ensure the low time offset. If no "collision" occurs between the periodic first synchronization signal and another signal, the network device does not need to additionally send the second synchronization signal. According to this sending mechanism, the network device may send another synchronization signal only when one synchronization signal cannot be sent. This saves energy on the network device side and further reduces resource overheads while ensuring the low time offset.

Optionally, the second synchronization signal may be sent together with a wake-up signal. In this optional solution, if there is still a to-be-sent wake-up signal in the period to which the first sending occasion belongs, the network device may send the second synchronization signal before sending the wake-up signal, that is, the first time period is before a sending moment of the wake-up signal. The second synchronization signal may be used to reduce a time offset when the terminal device receives the wake-up signal.

For a case in which the second synchronization signal is sent together with the wake-up signal, in a possible implementation, if the terminal device detects the wake-up signal on the configured paging occasion, to enable the terminal device to detect the wake-up signal on the paging occasion, the first time period may be within a first duration before the paging occasion (which is a paging occasion in the period to which the first sending occasion belongs).

A unit of the first duration is not limited in embodiments of this application. For example, the unit of the first duration may be a communication time unit like a symbol (symbol), a slot (slot), a subframe (subframe), or a frame (frame). Alternatively, the unit of the first duration may be an absolute time unit like a millisecond or a second.

When the first time period is within the first duration before the paging occasion, optionally, the first duration may be indicated by the network device to the terminal device. In this optional solution, the network device may send first indication information to the terminal device, and correspondingly, the terminal device receives the first indication information, where the first indication information indicates the first duration.

A message in which the first indication information is carried is not limited in embodiments of this application. For example, if the terminal device is in a radio resource control (radio resource control, RRC) idle (idle) state, the first indication information may be carried in the first synchronization signal and a system information (system information block, SIB), for example, a SIB 1. If the terminal device is in an RRC connected (connected) state, the first indication information may be carried in RRC signaling, downlink control information (downlink control information, DCI), or a medium access control (medium access control, MAC) control element (control element, CE).

Alternatively, the first duration may be predefined. In this case, the network device and the terminal device may predefine same first duration.

Optionally, if the paging occasion is periodic, duration of a period to which the paging occasion belongs may be the same as duration of the period to which the first sending occasion belongs.

Alternatively, duration of a period to which the paging occasion belongs may be the same as total duration of periodicities to which a plurality of first sending occasions respectively belong. In this case, in the period to which the paging occasion belongs, the first synchronization signal may be repeatedly sent a plurality of times by using the plurality of first sending occasions.

In another aspect, the preset rule 1 may alternatively be understood as that if either of the following two conditions is not met: A first sending resource overlaps a sending resource of a first signal, and a priority of the first signal is higher than a priority of the first synchronization signal, the network device determines not to send the second synchronization signal in the period to which the first sending occasion belongs.

For example, if the first sending occasion overlaps the sending resource of the first signal in time domain, but the priority of the first signal is lower than the priority of the first synchronization signal, the network device may still send the first synchronization signal on the first sending occasion, and does not send the second synchronization signal in the period to which the first sending occasion belongs.

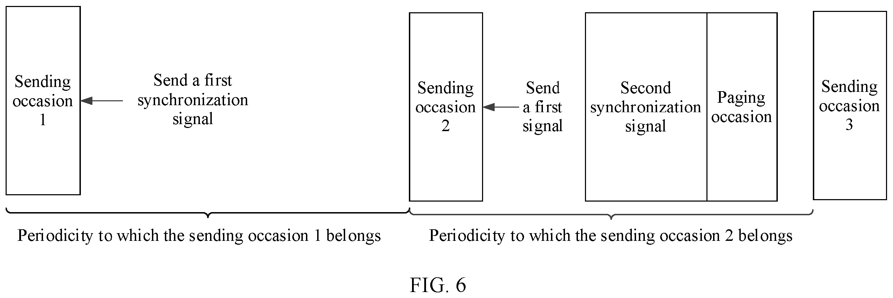

With reference to an example case shown in FIG. 6, the following describes content that the network device determines, according to the preset rule 1, whether to send the second synchronization signal in the period to which the first sending occasion belongs. For example, as shown in FIG. 6, it is assumed that sending occasions 1, 2, and 3 are all sending occasions of the first synchronization signal. In a period to which the sending occasion 1 belongs, both the first synchronization signal and the wake-up signal are sent. Because no first signal needs to be sent in the period, the second synchronization signal is not sent in the period according to the preset rule 1. In a period to which the sending occasion 2 belongs, the sending resource of the first signal overlaps the sending occasion 2 in time domain, and the priority of the first signal is higher than the priority of the first synchronization signal. In this case, the sending occasion 2 is occupied to send the first signal, and the network device sends the second synchronization signal within a first duration before a paging occasion in the period according to the preset rule 1.

Optionally, in a scenario in which the preset rule 1 is used, if the network device determines to send the first synchronization signal and a signal with a higher priority in the first signal by using the first sending resource, and there is a remaining resource in the first sending resource other than a resource required for sending the signal with the higher priority, the remaining resource may be used to send the first synchronization signal and the signal with a lower priority in the first signal.

For example, if the first sending occasion overlaps the sending resource of the first signal, the first synchronization signal is preferentially sent. It is assumed that the network device allocates a bandwidth of 100 MHz to the first synchronization signal, and the first synchronization signal occupies a frequency domain resource of 5 MHz. In this case, the first signal and the first synchronization signal may be simultaneously transmitted by using remaining 95 MHz.

If the remaining resource is insufficient to transmit a complete signal with a lower priority, in a possible implementation, when sending the signal with the lower priority by using the remaining resource, the network device may further perform rate matching (rate matching), so that the signal with the lower priority matches the remaining resource. For example, the network device may perform a puncturing operation on the first signal, and remaining data may be completely transmitted by using a remaining frequency domain resource.

If the remaining resource is insufficient to transmit the complete signal with the lower priority, in another possible implementation, the network device may send a part of the signal with the lower priority by using the remaining resource, and schedule another resource to send a remaining part of the signal with the lower priority, so that the complete signal with the lower priority can be sent.

In a possible implementation, in a scenario in which the preset rule 1 is used, to ensure the low time offset of the terminal device, the priority of the first synchronization signal may be set to the highest. In this case, even if the sending resource of the first signal overlaps the first sending resource, it can be ensured that the first sending occasion is not occupied by the first signal and may still be used to send the first synchronization signal.

S504: A possible preset rule (referred to as a preset rule 2 below for ease of description) is that if no first synchronization signal is detected on the first receiving occasion, the second synchronization signal is detected in a second time period. The second time period is in the period to which the first receiving occasion belongs and is later than an end moment of the first receiving occasion.

If the terminal device does not detect the first synchronization signal on the first receiving occasion, it indicates that another signal may collide with the first synchronization signal on the network device side. Consequently, the network device does not send the first synchronization signal. In this case, the network device may send another synchronization signal, namely, the second synchronization signal, in the period to which the first receiving occasion belongs, to ensure the low time offset. In this scenario, according to the preset rule 2, the terminal device may detect the second synchronization signal in the second time period only when the terminal device does not detect the first synchronization signal on the first receiving occasion. However, if the terminal device detects the first synchronization signal on the first receiving occasion, the terminal device does not need to additionally detect the second synchronization signal in the second time period. According to this receiving mechanism, the terminal device may detect another synchronization signal only when one synchronization signal is not detected. This saves energy on the terminal device side and further reduces resource overheads while ensuring the low time offset.

Optionally, if the terminal device configures a paging occasion used to detect a wake-up signal, the second time period may be within a first duration before the paging occasion (which is a paging occasion in the period to which the first receiving occasion belongs).

For details about the first duration, refer to the foregoing descriptions of the first duration in S503. Details are not described herein again.

Optionally, if the paging occasion is periodic, duration of a period to which the paging occasion belongs may be the same as duration of the period to which the first receiving occasion belongs.

In another aspect, the preset rule 2 may alternatively be understood as that if the first synchronization signal is detected on the first receiving occasion, the second synchronization signal is not detected in the period to which the first receiving occasion belongs.

If the terminal device detects the first synchronization signal on the first receiving occasion, it indicates that the first synchronization signal is normally sent on the network device side. In this case, the network device may not send the second synchronization signal. In this scenario, according to the preset rule 2, the terminal device does not need to detect the second synchronization signal in the second time period in the period to which the first receiving occasion belongs. This helps save energy of the terminal device.

In a possible case, if the terminal device detects the first synchronization signal on the first receiving occasion, and a paging occasion is configured for the terminal device, when determining not to detect the second synchronization signal in the period to which the first receiving occasion belongs, the terminal device may detect a wake-up signal on the paging occasion (a paging occasion in the period to which the first receiving occasion belongs).

In another possible case, if the terminal device receives a part of the first synchronization signal or a part of another signal (for example, the first signal described above) on the first receiving occasion, the terminal device may delay an original end moment of the first receiving occasion by specific duration, and continue to receive a signal within the delayed duration.

In addition, if the terminal device uses an LP-WUR design, and the terminal device detects neither the first synchronization signal nor the second synchronization signal in periodicities to which a plurality of consecutive receiving occasions of the first synchronization signal belong, the terminal device is probably not within a coverage area of the first synchronization signal or a coverage area of the second synchronization signal. In this case, the terminal device may turn on a main receiver.

In addition, the first time period and the second time period may be considered as a same time period. For example, the network device sends the second synchronization signal in a frame, and the terminal device also detects the second synchronization signal in the frame. In this case, the first time period and the second time period may be considered as the frame. Further, it may be considered that the first time period is the same as the second time period. Alternatively, the first time period and the second time period may be considered as different time periods. For example, the network device sends the second synchronization signal in a symbol, and because of a transmission delay, the terminal device detects the second synchronization signal in a next symbol. In this case, the first time period and the second time period may be considered as different time periods.

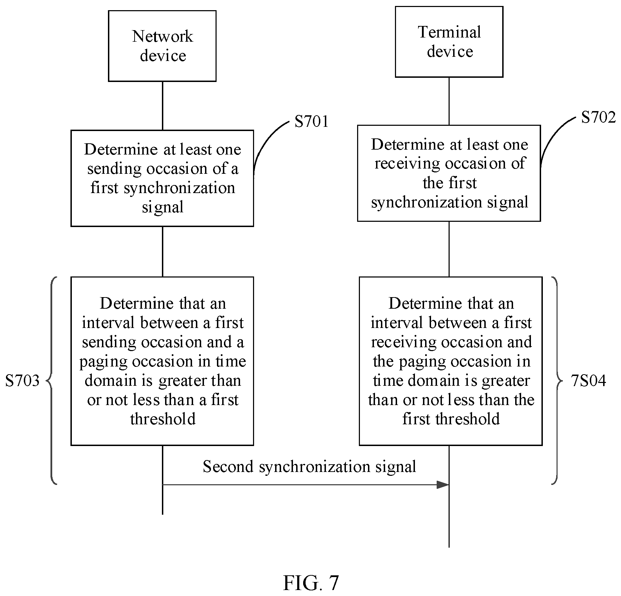

FIG. 7 shows another signal sending and receiving method according to an embodiment of this application. In FIG. 7, an example in which a network device and a terminal device are used as execution bodies for interaction is used to illustrate the method. However, the execution bodies for interaction are not limited in this application. For example, the network device in FIG. 7 may alternatively be a module, for example, a chip, a chip system, or a processor, used in the network device, or may be a logical node, a logical module, or software that can implement all or a part of functions of a network device node. For another example, the terminal device in FIG. 7 may alternatively be a module, for example, a chip, a chip system, or a processor, used in the terminal device, or may be a logical node, a logical module, or software that can implement all or a part of functions of a terminal device node. The signal sending and receiving method includes the following steps.

S701: The network device determines at least one sending occasion of a first synchronization signal.

For details of S701, refer to the foregoing descriptions of S501. Details are not described herein again.

S702: The terminal device determines at least one receiving occasion of the first synchronization signal.

For details of S702, refer to the foregoing descriptions of S502. Details are not described herein again.

A time sequence between S701 and S702 is not limited in embodiments of this application. FIG. 7 is merely an example for ease of understanding embodiments of this application, and does not represent an actual time sequence. For example, S701 may be performed before S702, or may be performed after S702, or S701 and S602 may be performed simultaneously.

Further, in embodiments of this application, the network device may determine, according to a preset rule, whether to send a second synchronization signal in a period to which the sending occasion of the first synchronization signal belongs. The terminal device may also determine, according to a preset rule, whether to detect the second synchronization signal in the period to which the receiving occasion of the first synchronization signal belongs.

In the following, any sending occasion of the first synchronization signal is referred to as a first sending occasion, and any receiving occasion of the first synchronization signal is referred to as a first receiving occasion. In S703 and S704 below, the first sending occasion and the first receiving occasion are used as examples to separately describe content that the network device determines, according to the preset rule, whether to send the second synchronization signal in a period to which the first sending occasion belongs, and that the terminal device determines, according to the preset rule, whether to detect the second synchronization signal in a period to which the first receiving occasion belongs.

S703: A possible preset rule (referred to as a preset rule 3 for ease of description below) is that if an interval between the first sending occasion and a paging occasion in time domain is greater than a first threshold, the network device sends the second synchronization signal in a first time period; or the preset rule 3 may be that if an interval between the first sending occasion and a paging occasion in time domain is not less than a first threshold, the network device sends the second synchronization signal in a first time period.

The paging occasion is used to send a wake-up signal, the first time period is in the period to which the first sending occasion belongs and is later than an end moment of the first sending occasion, and a type of the second synchronization signal is different from a type of the first synchronization signal. For details about the paging occasion, the first time period, and the second synchronization signal, refer to the foregoing descriptions of S501 and S503. Details are not described herein again.

That the interval between the first sending occasion and the paging occasion in time domain is greater than or not less than the first threshold means that there is a large interval between the paging occasion and the first synchronization signal sent on the first sending occasion in time domain. In this case, if the network device sends the wake-up signal on the paging occasion, because there is the large interval between the first synchronization signal and the wake-up signal in time domain, a time offset may be high when the terminal device receives the wake-up signal. In this scenario, according to the preset rule 3, the network device may additionally send another synchronization signal, namely, the second synchronization signal, only when the interval between the first sending occasion and the paging occasion in time domain is greater than or not less than the first threshold, to reduce the time offset. If the interval between the first sending occasion and the paging occasion in time domain is less than or not greater than the first threshold, the network device does not need to send the second synchronization signal. According to this signal sending mechanism, energy of the network device can be saved and resource overheads on a network side can be reduced while ensuring a low time offset.

Optionally, the first time period may be within a first duration before the paging occasion. The first duration may be indicated by the network device to the terminal device. In this solution, the network device may send third indication information to the terminal device, and correspondingly, the terminal device receives the third indication information, where the third indication information indicates the first duration. Alternatively, the first duration may be predefined. In this case, the network device and the terminal device may predefine same first duration. For a case in which the first time period is within the first duration before the paging occasion, refer to the foregoing descriptions of S503. Details are not described herein again.

In another aspect, the preset rule 3 may alternatively be understood as that if the interval between the first sending occasion and the paging occasion in time domain is less than or not greater than the first threshold, the network device determines not to send the second synchronization signal in the period to which the first sending occasion belongs.

That the interval between the first sending occasion and the paging occasion in time domain is less than or not greater than the first threshold means that there is a small interval between the paging occasion and the first synchronization signal sent on the first sending occasion in time domain. In this case, if the network device sends the wake-up signal on the paging occasion, because there is the small interval between the first synchronization signal and the wake-up signal in time domain, a time offset shall be within an acceptable range when the terminal device receives the wake-up signal. In this scenario, according to the preset rule 3, the network device may send only the first synchronization signal, and does not need to send another synchronization signal, namely, the second synchronization signal, so that energy of the network device can be saved, and resource overheads on a network side can be reduced.

In a scenario in which the network device determines, when the interval between the first sending occasion and the paging occasion in time domain is less than or not greater than the first threshold, not to send the second synchronization signal in the period to which the first sending occasion belongs, optionally, the network device may send second indication information to the terminal device, where the second indication information indicates that there is no second synchronization signal in the period to which the first sending occasion belongs. Correspondingly, after receiving the second indication information, the terminal device may determine, based on an indication of the second indication information, that there is no need to detect the second synchronization signal in the period to which the first sending occasion belongs. This helps save energy of the terminal device.

It may be understood that, according to the preset rule 3, if the network device determines to send the second synchronization signal, the network device sends the second synchronization signal in the first time period. Therefore, the second indication information may be sent before the first time period. A specific sending moment of the second indication information is not limited in embodiments of this application. For example, the network device may send the second indication information in a period previous to the period to which the first sending occasion belongs. For another example, the network device may send the second indication information within the first sending occasion.

A message in which the second indication information is carried is not limited in embodiments of this application. For example, if the terminal device is in a radio resource control RRC idle state, the second indication information may be carried in the first synchronization signal and a SIB 1. If the terminal device is in an RRC connected state, the second indication information may be carried in RRC signaling, DCI, or a MAC CE.

Optionally, the first threshold in the preset rule 3 may be indicated by the network device to the terminal device. In this optional solution, the network device may send fourth indication information to the terminal device, and correspondingly, the terminal device receives the fourth indication information, where the fourth indication information indicates the first threshold. Alternatively, the first threshold may be predefined. In this case, the network device and the terminal device may predefine a same first threshold.

Optionally, the third indication information and the fourth indication information may be carried in a same message, or may be carried in different messages.

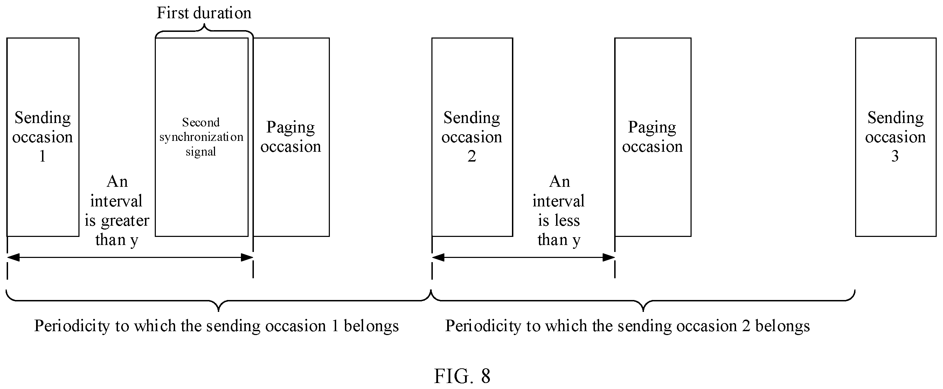

For example, FIG. 8 is a diagram in which the network device determines, according to the preset rule 3, whether to send the second synchronization signal in the period to which the first sending occasion belongs. As shown in FIG. 8, it is assumed that sending occasions 1, 2, and 3 are all sending occasions of the first synchronization signal. In a period to which the sending occasion 1 belongs, the network device sends the first synchronization signal within the sending occasion 1, and sends the wake-up signal within the paging occasion. In the period, an interval between the sending occasion 1 and the paging occasion in time domain (an interval between an end moment of the sending occasion and a start moment of the paging occasion in time domain is used as an example in FIG. 8) is greater than a threshold y (namely, the first threshold). Therefore, the second synchronization signal is sent within the first duration before the paging occasion in the period according to the preset rule 3. In a period to which the sending occasion 2 belongs, the network device sends the first synchronization signal within the sending occasion 2, and sends the wake-up signal within the paging occasion. In the period, because an interval between the sending occasion 2 and the paging occasion is less than the threshold y, the second synchronization signal is not sent in the period according to the preset rule 3.

The foregoing describes one possible preset rule 3. In a possible scenario, the preset rule 3 may alternatively be that if an interval between the first sending occasion and a sending moment of a wake-up signal (a wake-up signal in the period to which the first sending occasion belongs) in time domain is greater than a first threshold, the network device sends the second synchronization signal in a first time period; or the preset rule 3 may be that if an interval between the first sending occasion and a sending moment of a wake-up signal in time domain is not less than a first threshold, the network device sends the second synchronization signal in a first time period.

For details about the first time period and the second synchronization signal, refer to the foregoing descriptions of S501 and S503. Details are not described herein again.

In another aspect, the preset rule 3 may alternatively be understood as that if an interval between the first sending occasion and a sending moment of a wake-up signal in time domain is less than or not greater than a first threshold, the network device determines not to send the second synchronization signal in the period to which the first sending occasion belongs.

In this scenario, the network device may determine, based on a value relationship between the first threshold and the interval between the sending moment of the wake-up signal and the first sending occasion in time domain, whether to send the second synchronization signal in the period to which the first sending occasion belongs. For a specific implementation, refer to the foregoing descriptions of the first possible preset rule 3. Details are not described herein again.

S704: A possible preset rule (referred to as a preset rule 4 for ease of description below) is that if an interval between the first receiving occasion and a paging occasion in time domain is greater than a first threshold, the terminal device detects the second synchronization signal in a second time period; or the preset rule 4 is that if an interval between the first receiving occasion and a paging occasion in time domain is not less than a first threshold, the terminal device detects the second synchronization signal in a second time period.

The paging occasion is used to detect a wake-up signal, the second time period is in the period to which the first receiving occasion belongs and is later than an end moment of the first receiving occasion, and a type of the second synchronization signal is different from a type of the first synchronization signal. For details about the paging occasion, the second time period, and the second synchronization signal, refer to the foregoing descriptions of S502 and S504. Details are not described herein again.

That the interval between the first receiving occasion and the paging occasion in time domain is greater than or not less than the first threshold means that if the network device sends the first synchronization signal on the first receiving occasion, there is a large interval between the first synchronization signal and the paging occasion in time domain. In this case, to ensure a low time offset of the wake-up signal, the network device may send another synchronization signal, namely, the second synchronization signal. In this scenario, according to the preset rule 4, the terminal device may detect the second synchronization signal in the second time period only when the interval between the first receiving occasion and the paging occasion in time domain is greater than or not less than the first threshold. If the interval between the first receiving occasion and the paging occasion in time domain is less than or not greater than the first threshold, the terminal device does not need to additionally detect the second synchronization signal in the second time period. According to this receiving mechanism, energy on the terminal device side may be saved and resource overheads are further reduced while ensuring a low time offset.

For details about the interval between the first receiving occasion and the paging occasion in time domain, refer to the foregoing descriptions of the interval between the first sending occasion and the paging occasion in time domain in S703. Details are not described herein again.

Optionally, the second time period may be within a first duration before the paging occasion. For details about this case, refer to the foregoing descriptions of S703 in which the first time period is within the first duration before the paging occasion. Details are not described herein again.

In another aspect, the preset rule 4 may alternatively be understood as that if the interval between the first receiving occasion and the paging occasion in time domain is less than or not greater than the first threshold, the terminal device determines not to detect the second synchronization signal in the period to which the first receiving occasion belongs.

That the interval between the first receiving occasion and the paging occasion in time domain is less than or not greater than the first threshold means that if the network device sends the first synchronization signal on the first receiving occasion, there is a small interval between the first synchronization signal and the paging occasion in time domain. In this case, the time offset shall be within an acceptable range. Therefore, the network device may not send another synchronization signal, namely, the second synchronization signal. In this scenario, according to the preset rule 4, the terminal device does not need to detect the second synchronization signal in the period to which the first receiving occasion belongs. This helps save energy of the terminal device.

In a possible scenario, the terminal device may alternatively determine, based on an indication from the network device, not to detect the second synchronization signal in the period to which the first receiving occasion belongs. In this optional solution, the terminal device may receive second indication information from the network device, where the second indication information indicates that there is no second synchronization signal in the period to which the first receiving occasion belongs. The terminal device may determine, based on the second indication information, not to detect the second synchronization signal in the period to which the first receiving occasion belongs. For details about the second indication information, refer to the foregoing descriptions of the second indication information in S703. Details are not described herein again.

Optionally, the first threshold in the preset rule 4 may be indicated by the network device to the terminal device, or the first threshold may be predefined. For details, refer to the foregoing descriptions of the first threshold in S703. Details are not described herein again.

In S703 and S704, the step that the network device determines, according to the preset rule 3, whether to send the second synchronization signal and the step that the terminal device determines, according to the preset rule 4, whether to detect the second synchronization signal may be performed in sequence (the step that the network device determines whether to send the second synchronization signal may be performed first, or the step that the terminal device determines whether to detect the second synchronization signal may be performed first), or may be performed simultaneously.

In addition, the first time period and the second time period may be considered as a same time period. Alternatively, the first time period and the second time period may be considered as different time periods. For details, refer to the foregoing descriptions. Details are not described herein again.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the network device in the foregoing method embodiments, an apparatus including the network device, or a component that can be used in the network device. Alternatively, the communication apparatus may be the terminal device in the foregoing method embodiments, an apparatus including the terminal device, or a component that can be used in the terminal device. It may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that module division in embodiments of this application is an example, and is merely logical function division. There may be another division manner during actual implementation.

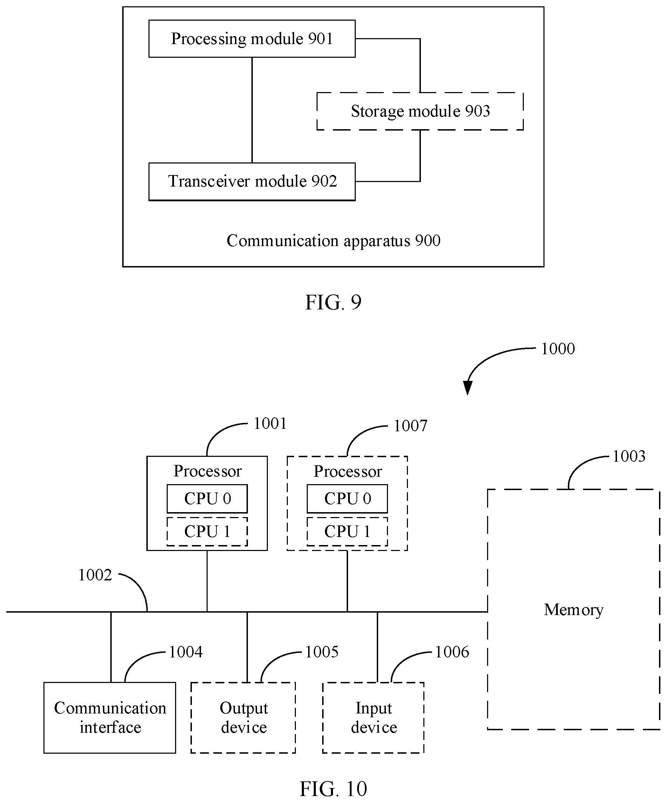

FIG. 9 is a diagram of a structure of a communication apparatus 900. The communication apparatus 900 includes a processing module 901 and a transceiver module 902. Optionally, the communication apparatus 900 may further include a storage module 903. The transceiver module 902 may also be referred to as a transceiver unit, is configured to implement receiving and sending functions, and for example, may be a transceiver circuit, a transceiver machine, a transceiver, or a communication interface.

For example, the communication apparatus 900 is the network device in the foregoing embodiments. In a possible implementation,
the processing module 901 is configured to determine at least one sending occasion of a first synchronization signal. The at least one sending occasion is periodic, and the at least one sending occasion includes a first sending occasion. The transceiver module 902 is configured to: when the first sending occasion overlaps a sending resource of a first signal in time domain, and a priority of the first signal is higher than a priority of the first synchronization signal, send a second synchronization signal in a first time period, where the first time period is in a period to which the first sending occasion belongs and is later than an end moment of the first sending occasion.

Optionally, the first time period is within a first duration before a paging occasion, and the paging occasion is used to send a wake-up signal.

Optionally, the transceiver module 902 is further configured to send first indication information, where the first indication information indicates the first duration; or the first duration is predefined.

In another possible implementation, the processing module 901 is configured to determine at least one sending occasion of a first synchronization signal. The at least one sending occasion is periodic, and the at least one sending occasion includes a first sending occasion. The transceiver module 902 is configured to: when an interval between the first sending occasion and a paging occasion in time domain is greater than or not less than a first threshold, send a second synchronization signal in a first time period, where the paging occasion is used to send a wake-up signal, and the first time period is in a period to which the first sending occasion belongs and is later than an end moment of the first sending occasion.

Optionally, the processing module 901 is further configured to: when the interval between the first sending occasion and the paging occasion in time domain is less than or not greater than the first threshold, determine not to send the second synchronization signal in the period to which the first sending occasion belongs.

Optionally, the transceiver module 902 is further configured to send second indication information, where the second indication information indicates that there is no second synchronization signal in the period to which the first sending occasion belongs.

Optionally, that the transceiver module 902 sends the second indication information includes: sending the second indication information in a period previous to the period to which the first sending occasion belongs; or sending the second indication information within the first sending occasion.

Optionally, the first time period is within a first duration before the paging occasion.

Optionally, the transceiver module 902 is further configured to send third indication information, where the third indication information indicates the first duration; or the first duration is predefined.

Optionally, the transceiver module 902 is further configured to send fourth indication information, where the fourth indication information indicates the first threshold; or the first threshold is predefined.

For example, the communication apparatus 900 is the terminal device in the foregoing embodiments. In a possible implementation,
the processing module 901 is configured to determine at least one receiving occasion of a first synchronization signal, where the at least one receiving occasion is periodic, and the at least one receiving occasion includes a first receiving occasion. The transceiver module 902 is configured to detect a second synchronization signal in a second time period when no first synchronization signal is detected on the first receiving occasion, where the second time period is in a period to which the first receiving occasion belongs and is later than an end moment of the first receiving occasion.

Optionally, the transceiver module 902 is further configured to: when the first synchronization signal is detected on the first receiving occasion, detect a wake-up signal on a paging occasion, where the paging occasion is in the period to which the first receiving occasion belongs.

Optionally, the second time period is within a first duration before a paging occasion, and the paging occasion is used to detect a wake-up signal.

Optionally, the transceiver module 902 is further configured to receive first indication information, where the first indication information indicates the first duration; or the first duration is predefined.

In another possible implementation, the processing module 901 is configured to determine at least one receiving occasion of a first synchronization signal, where the at least one receiving occasion is periodic, and the at least one receiving occasion includes a first receiving occasion. The transceiver module 902 is configured to: when an interval between the first receiving occasion and a paging occasion in time domain is greater than or not less than a first threshold, detect a second synchronization signal in a second time period, where the paging occasion is used to detect a wake-up signal, and the second time period is in a period to which the first receiving occasion belongs and is later than an end moment of the first receiving occasion.

Optionally, the processing module 901 is further configured to: when the interval between the first receiving occasion and the paging occasion in time domain is less than or not greater than the first threshold, determine not to detect the second synchronization signal in the period to which the first receiving occasion belongs.

Optionally, the transceiver module 902 is further configured to receive second indication information, where the second indication information indicates that there is no second synchronization signal in the period to which the first receiving occasion belongs. The processing module 901 is further configured to determine, based on the second indication information, not to detect the second synchronization signal in the period to which the first receiving occasion belongs.

Optionally, the second time period is within a first duration before the paging occasion.

Optionally, the transceiver module 902 is further configured to receive third indication information, where the third indication information indicates the first duration; or the first duration is predefined.

Optionally, the transceiver module 902 is further configured to receive fourth indication information, where the fourth indication information indicates the first threshold; or the first threshold is predefined.

All related content of the steps in the foregoing method embodiments may be cited in function descriptions of the corresponding functional modules. Details are not described herein again.

Optionally, the module in FIG. 9 may also be referred to as a unit. For example, the processing module may be referred to as a processing unit, and the transceiver module may be referred to as a transceiver unit. In addition, in the embodiment shown in FIG. 9, names of the units may not be names shown in the figure. For example, the transceiver module may also be referred to as a communication module or a communication unit.

When each unit in FIG. 9 is implemented in a form of a software functional module and sold or used as an independent product, the unit may be stored in a computer-readable storage medium. Based on such an understanding, the technical solutions of embodiments of this application essentially, or the part contributing to the conventional technology, or all or some of the technical solutions may be implemented in form of software product. The software product is stored in a storage medium and includes several instructions for instructing a computer device (which may be a personal computer, a server, a network device) or a processor (processor) to perform all or some of the steps in the methods described in embodiments of this application. The storage medium that stores the computer software product includes any medium that can store program code, for example, a USB flash drive, a removable hard disk, a read-only memory (read-only memory, ROM), a random access memory (random access memory, RAM), a magnetic disk, or an optical disc.

In embodiments of this application, the communication apparatus 900 is presented in a form of functional modules obtained through division in an integrated manner. The "module" herein may be an application-specific integrated circuit (application-specific integrated circuit, ASIC), a circuit, a processor that executes one or more software programs or firmware programs, a memory, an integrated logic circuit, and/or another component that can provide the foregoing function.

In a simple embodiment, a person skilled in the art may figure out that the communication apparatus 900 may be in a form of a communication apparatus shown in FIG. 10.

As shown in FIG. 10, the communication apparatus 1000 includes one or more processors 1001, a communication line 1002, and at least one communication interface (a communication interface 1004 and one processor 1001 are merely used as an example in FIG. 10 for description), and optionally may further include a memory 1003.

The processor 1001 may be a general-purpose central processing unit (central processing unit, CPU), a microprocessor, an ASIC, or one or more integrated circuits for controlling program execution of the solutions of this application.

The communication line 1002 may include a path for connecting different components.

The communication interface 1004 may be a transceiver module, configured to communicate with another device or a communication network like the Ethernet, a RAN, a terminal, or a wireless local area network (wireless local area network, WLAN). For example, the transceiver module may be an apparatus like a transceiver or a transceiver machine. Optionally, the communication interface 1004 may alternatively be a transceiver circuit or an input/output interface located in the processor 1001, and is configured to implement a signal input and a signal output of the processor.

The memory 1003 may be an apparatus having a storage function. For example, the memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently and is connected to the processor through the communication line 1002. The memory may alternatively be integrated with the processor.

The memory 1003 is configured to store computer-executable instructions for executing the solutions of this application, and the processor 1001 controls the execution. The processor 1001 is configured to execute the computer-executable instructions stored in the memory 1003, to implement the signal sending and receiving methods provided in embodiments of this application.

Alternatively, optionally, in embodiments of this application, the processor 1001 may perform a processing-related function in the signal sending and receiving methods provided in the following embodiments of this application, and the communication interface 1004 is responsible for communicating with another device or a communication network. This is not specifically limited in embodiments of this application.

Optionally, the computer-executable instructions in this embodiment of this application may also be referred to as application program code. This is not specifically limited in embodiments of this application.

During specific implementation, in an embodiment, the processor 1001 may include one or more CPUs, such as a CPU 0 and a CPU 1 in FIG. 10.

During specific implementation, in an embodiment, the communication apparatus 1000 may include a plurality of processors, for example, the processor 1001 and a processor 1007 in FIG. 10. Each of these processors may be a single-core (single-core) processor, or may be a multi-core (multi-core) processor. The processor may include but is not limited to at least one of the following compute devices that run various types of software: a central processing unit (central processing unit, CPU), a microprocessor, a digital signal processor (digital signal processor, DSP), a microcontroller unit (microcontroller unit, MCU), an artificial intelligence processor, and the like. Each compute device may include one or more cores for executing software instructions to perform an operation or processing.

During specific implementation, in an embodiment, the communication apparatus 1000 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive a user input in a plurality of manners. For example, the input device 1006 may be a mouse, a keyboard, a touchscreen device, or a sensor device.

The communication apparatus 1000 may also be referred to as a communication device sometimes, and may be a general-purpose device or a dedicated device. For example, the communication apparatus 1000 may be a desktop computer, a portable computer, a network server, a palmtop computer (personal digital assistant, PDA), a mobile phone, a tablet computer, a wireless terminal device, an embedded device, or a device having a structure similar to that in FIG. 10. A type of the communication apparatus 1000 is not limited in embodiments of this application.

In addition, a composition structure shown in FIG. 10 does not constitute a limitation on the communication apparatus. In addition to the components shown in FIG. 10, the communication apparatus 1000 may include more or fewer components than those shown in the figure, or some components may be combined, or different component arrangements may be used.

Optionally, the processor 1001 in the communication apparatus 1000 shown in FIG. 10 may invoke computer-executable instructions stored in the memory 1003, to implement functions/implementation processes of the transceiver module 902 and the processing module 901 in FIG. 9. Alternatively, the processor 1001 in the communication apparatus 1000 shown in FIG. 10 may invoke the computer-executable instructions stored in the memory 1003, to implement a function/implementation process of the processing module 901 in FIG. 9, and the communication interface 1004 in the communication apparatus 1000 shown in FIG. 10 may implement a function/implementation process of the transceiver module 902 in FIG. 9.

It should be understood that one or more of the foregoing modules or units may be implemented by using software, hardware, or a combination thereof. When any one of the foregoing modules or units is implemented by using software, the software exists in a form of computer program instructions, and is stored in a memory. A processor may be configured to execute the program instructions to implement the foregoing method procedures. The processor may be built in an SoC or ASIC, or may be an independent semiconductor chip. In addition to the core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a DSP chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and the hardware may run necessary software or does not depend on software, to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to instruct the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method in any one of the foregoing method embodiments or any one of the implementations in the method embodiments.

Optionally, an embodiment of this application further provides a communication system. The communication system includes the network device in the foregoing method embodiments and the terminal device in the foregoing method embodiments.

All or some of the foregoing embodiments may be implemented by using software, hardware, firmware or any combination thereof. When a software program is used for implementation, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, the term "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce good effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A signal sending method, wherein the method comprises:
determining at least one sending occasion of a first synchronization signal, wherein the at least one sending occasion is periodic, and the at least one sending occasion comprises a first sending occasion; and
if the first sending occasion overlaps a sending resource of a first signal in time domain, and a priority of the first signal is higher than a priority of the first synchronization signal, sending a second synchronization signal in a first time period, wherein the first time period is in a period to which the first sending occasion belongs and is later than an end moment of the first sending occasion, and a type of the second synchronization signal is different from a type of the first synchronization signal.

2. The method according to claim 1, wherein
the first time period is within a first duration before a paging occasion, and the paging occasion is used to send a wake-up signal.

3. The method according to claim 2, wherein the method further comprises:
sending first indication information, wherein the first indication information indicates the first duration; or
the first duration is predefined.

4. A signal sending method, wherein the method comprises:
determining at least one sending occasion of a first synchronization signal, wherein the at least one sending occasion is periodic, and the at least one sending occasion comprises a first sending occasion; and
if an interval between the first sending occasion and a paging occasion in time domain is greater than or not less than a first threshold, sending a second synchronization signal in a first time period, wherein the paging occasion is used to send a wake-up signal, the first time period is in a period to which the first sending occasion belongs and is later than an end moment of the first sending occasion, and a type of the second synchronization signal is different from a type of the first synchronization signal.

5. The method according to claim 4, wherein the method further comprises:
if the interval between the first sending occasion and the paging occasion in time domain is less than or not greater than the first threshold, determining not to send the second synchronization signal in the period to which the first sending occasion belongs.

6. The method according to claim 5, wherein the method further comprises:
sending second indication information, wherein the second indication information indicates that there is no second synchronization signal in the period to which the first sending occasion belongs.

7. The method according to claim 6, wherein sending the second indication information comprises:
sending the second indication information in a period previous to the period to which the first sending occasion belongs; or
sending the second indication information within the first sending occasion.

8. The method according to any one of claims 4 to 7, wherein the first time period is within a first duration before the paging occasion.

9. The method according to claim 8, wherein the method further comprises:
sending third indication information, wherein the third indication information indicates the first duration; or
the first duration is predefined.

10. The method according to any one of claims 4 to 9, wherein the method further comprises:
sending fourth indication information, wherein the fourth indication information indicates the first threshold; or
the first threshold is predefined.

11. A signal receiving method, wherein the method comprises:
determining at least one receiving occasion of a first synchronization signal, wherein the at least one receiving occasion is periodic, and the at least one receiving occasion comprises a first receiving occasion; and
if no first synchronization signal is detected on the first receiving occasion, detecting a second synchronization signal in a second time period, wherein the second time period is in a period to which the first receiving occasion belongs and is later than an end moment of the first receiving occasion, and a type of the second synchronization signal is different from a type of the first synchronization signal.

12. The method according to claim 11, wherein
if the first synchronization signal is detected on the first receiving occasion, detecting a wake-up signal on a paging occasion, wherein the paging occasion is in the period to which the first receiving occasion belongs.

13. The method according to claim 11, wherein the second time period is within a first duration before a paging occasion, and the paging occasion is used to detect a wake-up signal.

14. The method according to claim 13, wherein the method further comprises:
receiving first indication information, wherein the first indication information indicates the first duration; or
the first duration is predefined.

15. A signal receiving method, wherein the method comprises:
determining at least one receiving occasion of a first synchronization signal, wherein the at least one receiving occasion is periodic, and the at least one receiving occasion comprises a first receiving occasion; and
if an interval between the first receiving occasion and a paging occasion in time domain is greater than or not less than a first threshold, detecting a second synchronization signal in a second time period, wherein the paging occasion is used to detect a wake-up signal, the second time period is in a period to which the first receiving occasion belongs and is later than an end moment of the first receiving occasion, and a type of the second synchronization signal is different from a type of the first synchronization signal.

16. The method according to claim 15, wherein the method further comprises:
if the interval between the first receiving occasion and the paging occasion in time domain is less than or not greater than the first threshold, determining not to detect the second synchronization signal in the period to which the first receiving occasion belongs.

17. The method according to claim 15, wherein the method further comprises:
receiving second indication information, wherein the second indication information indicates that there is no second synchronization signal in the period to which the first receiving occasion belongs; and
determining not to detect the second synchronization signal in the period to which the first receiving occasion belongs.

18. The method according to any one of claims 15 to 17, wherein
the second time period is within a first duration before the paging occasion.

19. The method according to claim 18, wherein the method further comprises:
receiving third indication information, wherein the third indication information indicates the first duration; or
the first duration is predefined.

20. The method according to any one of claims 15 to 19, wherein the method further comprises:
receiving fourth indication information, wherein the fourth indication information indicates the first threshold; or
the first threshold is predefined.

21. A communication apparatus, wherein the apparatus comprises: a module configured to perform the method according to any one of claims 1 to 3, or a module configured to perform the method according to any one of claims 4 to 10, or a module configured to perform the method according to any one of claims 11 to 14, or a module configured to perform the method according to any one of claims 15 to 20.

22. A communication apparatus, wherein the communication apparatus comprises a processor; and the processor is configured to enable the communication apparatus to perform the method according to any one of claims 1 to 3, or is configured to enable the communication apparatus to perform the method according to any one of claims 4 to 10, or is configured to enable the communication apparatus to perform the method according to any one of claims 11 to 14, or is configured to enable the communication apparatus to perform the method according to any one of claims 15 to 20.

23. A computer-readable storage medium, wherein the computer-readable storage medium comprises a computer program or instructions, and when the computer program or the instructions are run on a computer, the method according to any one of claims 1 to 3 is performed, or the method according to any one of claims 4 to 10 is performed, or the method according to any one of claims 11 to 14 is performed, or the method according to any one of claims 15 to 20 is performed.

24. A computer program product, wherein the computer program product comprises instructions, and when the instructions are run on a computer, the method according to any one of claims 1 to 3 is performed, or the method according to any one of claims 4 to 10 is performed, or the method according to any one of claims 11 to 14 is performed, or the method according to any one of claims 15 to 20 is performed.
